(19) Europäisches Patentamt
European Patent Office
Office européen des brevets

(11) **EP 4 553 917 A1**

(12) **EUROPEAN PATENT APPLICATION**

(43) Date of publication:
**14.05.2025 Bulletin 2025/20**

(21) Application number: **24211282.9**

(22) Date of filing: **06.11.2024**

(51) International Patent Classification (IPC):
**H01M 4/133** (2010.01)    **H01M 4/62** (2006.01)
**H01M 4/02** (2006.01)

(52) Cooperative Patent Classification (CPC):
**H01M 4/133;** H01M 4/625; H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.11.2023 KR 20230152857**

(71) Applicant: **SK On Co., Ltd.**
**Seoul 03161 (KR)**

(72) Inventors:
• **PARK, Gwi Ok**
**34124 Daejeon (KR)**

• **MOON, Joon Hyung**
**34124 Daejeon (KR)**
• **LA, Yun Ji**
**34124 Daejeon (KR)**
• **PARK, Eun Jun**
**34124 Daejeon (KR)**
• **YANG, Young Mo**
**34124 Daejeon (KR)**

(74) Representative: **Stolmár & Partner
Patentanwälte PartG mbB
Blumenstraße 17
80331 München (DE)**

(54) **ANODE ACTIVE MATERIAL FOR A LITHIUM SECONDARY BATTERY AND LITHIUM SECONDARY BATTERY INCLUDING THE SAME**

(57)    An anode active material for a lithium secondary battery according to embodiments of the present disclosure includes composite particles including carbon-based particles including pores, and a silicon-containing coating formed on a surface of the carbon-based particles, wherein the composite particles have an equivalent porosity of 5 to 25.1%.

[FIG. 1]

EP 4 553 917 A1

**Description**

[BACKGROUND OF THE INVENTION]

1. Field of the Invention

The disclosure of the present application relates to an anode active material for a lithium secondary battery and a lithium secondary battery including the anode active material.

2. Description of the Related Art

A secondary battery is a battery which can be repeatedly charged and discharged. With rapid progress of information and communication, and display industries, the secondary battery has been widely applied to various portable electronic telecommunication devices such as a camcorder, a mobile phone, a laptop computer as a power source thereof. Recently, a battery pack including the secondary battery has also been developed and applied to an eco-friendly automobile such as an electric vehicle, a hybrid vehicle, etc., as a power source thereof.

Examples of the secondary battery may include a lithium secondary battery, a nickelcadmium battery, a nickel-hydrogen battery and the like. Among them, the lithium secondary battery has a high operating voltage and a high energy density per unit weight, and is advantageous in terms of a charging speed and light weight, such that development thereof has been proceeded in this regard.

Recently, as subjects, to which the lithium secondary battery is applied, are expanded, development for a lithium secondary battery having a higher capacity and output has been proceeded. For example, a composite compound of silicon and carbon having high capacity may be prepared and used for an anode active material.

However, since a silicon-carbon composite anode active material has a large difference in volume expansion rate, cracks in the anode active material and exposure to an electrolyte may occur due to repeated charging and discharging of the battery.

[SUMMARY OF THE INVENTION]

According to one aspect of the present disclosure, it is an object to provide an anode active material for a lithium secondary battery with improved life-span characteristics.

According to another aspect of the present disclosure, it is an object to provide a lithium secondary battery with improved life-span characteristics, which includes the anode active material.

To achieve the above object, according to an aspect of the present invention, there is provided an anode active material for a lithium secondary battery including: carbon-based particles including pores; and composite particles including a silicon-containing coating formed on a surface of the carbon-based particles, wherein the composite particles have an equivalent porosity of 5 to 25.1%, which is defined by Equation 1 below:

[Equation 1]

$$ Equivalent\ porosity\ (\%) = \left( 1 - \frac{\frac{W_{carbon}}{D_{carbon}} + \frac{W_{Si}}{D_{Si}}}{\frac{W_{carbon} + W_{Si}}{D_P}} \right) * 100 $$

In Equation 1, $D_{carbon}$ is a density (g/cm$^3$) of carbon, $D_{Si}$ is a density (g/cm$^3$) of silicon, $D_P$ is a density (g/cm$^3$) of the composite particles measured by a helium (He) pycnometer, $W_{Si}$ is a weight (g) of silicon included in the composite particles, and $W_{carbon}$ is a weight (g) of carbon included in the composite particles.

In some embodiments, $W_{Si}$ in Equation 1 may be calculated through Equation 2 below:

[Equation 2]

$$ W_{Si}(g) = \left( \frac{W_{carbon}}{1 - R_{Si}} \right) - 1 $$

In Equation 2, $R_{Si}$ is a ratio of a weight of silicon included in the silicon-containing coating to a total weight of the composite particles measured through inductively coupled plasma (ICP) analysis, and $W_{carbon}$ is a weight (g) of carbon included in the composite particles.

In some embodiments, $D_{carbon}$ may be 2.1 g/cm$^3$, and $D_{Si}$ may be 2.33 g/cm$^3$.

In some embodiments, the carbon-based particles may include an amorphous structure.

In some embodiments, silicon included in the silicon-containing coating may include an amorphous structure.

In some embodiments, the composite particles may have an internal deposition index of 1.0 to 2.0, which is represented by Equation 3 below:

[Equation 3]

$$Internal\ deposition\ index = \frac{(V_t \times W_{Carbon}) - \left(\frac{W_{Carbon} + W_{Si}}{D_P} - \frac{W_{Carbon}}{D_{carbon}} - \frac{W_{Si}}{D_{Si}}\right)}{\frac{W_{Si}}{D_{Si}}}$$

In Equation 3, Vt is a specific volume (cm$^3$/g) of the pores of the carbon-based particles, $D_{carbon}$ is a density (g/cm$^3$) of carbon, $D_{Si}$ is a density (g/cm$^3$) of silicon, $D_P$ is a density (g/cm$^3$) of the composite particles (g/cm$^3$) measured by a helium pycnometer, $W_{Si}$ is a weight (g) of silicon included in the composite particles, and $W_{carbon}$ is a weight (g) of carbon included in the composite particles.

In some embodiments, $W_{Si}$ in Equation 3 may be calculated through Equation 2 below:

[Equation 2]

$$W_{Si}(g) = \left(\frac{W_{carbon}}{1 - R_{Si}}\right) - 1$$

In Equation 2, $R_{Si}$ is a ratio of a weight of silicon included in the silicon-containing coating to a total weight of the composite particles measured through inductively coupled plasma (ICP) analysis, and $W_{carbon}$ is a weight (g) of carbon included in the composite particles.

In some embodiments, $D_{carbon}$ may be 2.1 g/cm$^3$, and $D_{Si}$ may be 2.33 g/cm$^3$.

In some embodiments, Vt may be measured by a nitrogen adsorption/desorption method.

In some embodiments, the composite particles may further include a carbon coating formed on the silicon-containing coating.

In some embodiments, the pores may include a shape recessed from the outermost portion of the carbon-based particles into an inside of the carbon-based particles.

In some embodiments, the pores may include closed pores which are blocked from an outside of the carbon-based particles by the silicon-containing coating.

According to another aspect of the present invention, there is provided a lithium secondary battery including: an anode which includes the anode active material for a lithium secondary battery; and a cathode disposed to face the anode.

According to an embodiment of the present disclosure, the volume expansion of silicon may be sufficiently suppressed. In addition, the energy density, output characteristics, and life-span characteristics of the anode active material may be improved.

According to an embodiment of the present disclosure, the content of silicon formed on the inner surface of the pores may be increased, and the content of silicon deposited on the outside of carbon-based particles may be decreased. In addition, the efficiency of the binder may be improved. Accordingly, the life-span characteristics thereof may be improved.

The anode active material for a lithium secondary battery and the lithium secondary battery including the anode active material of the present disclosure may be widely applied to green technology fields such as an electric vehicle, and a battery charging station, as well as other solar power generation and wind power generation using the batteries. The anode active material for a lithium secondary battery and the lithium secondary battery including the anode active material of the present disclosure may be used in an eco-friendly electric vehicle, and a hybrid vehicle, etc., which are intended to prevent climate change by suppressing air pollution and greenhouse gas emissions.

[BRIEF DESCRIPTION OF THE DRAWINGS]

The above and other objects, features and other advantages of the present invention will be more clearly understood from the following detailed description taken in conjunction with the accompanying drawings, in which:

FIG. 1 is a schematic cross-sectional view illustrating a composite particle according to exemplary embodiments; and
FIGS. 2 and 3 are a schematic plan view and a cross-sectional view illustrating a lithium secondary battery according to exemplary embodiments, respectively.

[DETAILED DESCRIPTION OF THE INVENTION]

Embodiments of the present disclosure provide an anode active material for a lithium secondary battery (hereinafter, may be abbreviated as an "anode active material") including composite particles. In addition, a lithium secondary battery (hereinafter, may be abbreviated as a "secondary battery") including the anode active material is provided.

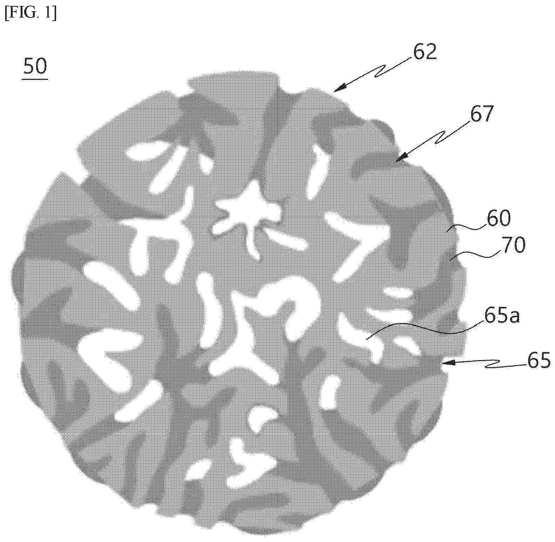

FIG. 1 is a schematic cross-sectional view illustrating a composite particle according to exemplary embodiments.

FIG. 1 schematically illustrates the shape of the composite particle for the convenience of description, but the structure/shape of the composite particle of the present disclosure are not limited to those shown in FIG. 1. For example, the cross-section of the carbon-based particle may be randomly changed from a circle. In addition, a silicon-containing coating may be partially formed on the pores and the surface of the carbon-based particles, and may be formed as a plurality of discontinuous islands or patterns.

Referring to FIG. 1, a composite particle 50 may include carbon-based particles 60 and a silicon (Si)-containing coating 70.

In exemplary embodiments of the present disclosure, the carbon-based particle 60 may include pores 65. For example, the carbon-based particle 60 may be a porous particle including a plurality of pores.

In some embodiments, the carbon-based particle 60 may include activated carbon, carbon nanotubes, carbon nanowires, graphene, carbon fibers, carbon black, graphite, porous carbon, pyrolyzed cryogel, pyrolyzed xerogel, pyrolyzed aerogel and the like. These may be used alone or in combination of two or more thereof.

In some embodiments, the above-described carbon-based particle 60 may include an amorphous structure or a crystalline structure.

According to an embodiment, the carbon-based particle 60 may include an amorphous structure. Thereby, durability of the anode active material may be increased, and an occurrence of cracks may be suppressed during charging and discharging of the battery or when an external impact is applied thereto. Accordingly, the life-span characteristics of the secondary battery may be improved.

The silicon-containing coating 70 may be formed on the surface of carbon-based particles 60 including the pores 65. For example, volume expansion of silicon included in the silicon-containing coating 70 may be alleviated by the pores 65. Accordingly, cracks due to a difference in the volume expansion rates between carbon (e.g., about 150% by volume ("vol %") or less) and silicon (e.g., about 400 vol % or more) during charging and discharging of the battery may be prevented while employing relatively high capacity characteristics of silicon. Accordingly, gas generation due to a side reaction between the anode active material and the electrolyte may be suppressed, and the life-span characteristics of the secondary battery may be improved.

In some embodiments, the silicon-containing coating 70 may include silicon, and optionally further include $SiO_x$ ($0<x<2$).

In some embodiments, the silicon included in the silicon-containing coating 70 may include an amorphous structure. Accordingly, structural stability may be improved and life-span characteristics thereof may be enhanced under high-temperature environments or during repeated charging and discharging of the battery.

The pores 65 of the carbon-based particle 60 may include a shape recessed from the outermost portion of the carbon-based particle 60 into an inside of the carbon-based particle 60. For example, the pores 65 may include open pores which are open to an outside of the carbon-based particle 60.

The term(s) the "surface of carbon-based particles" and/or "surface of carbon-based particles 60" as used herein may refer to an outer surface 62 of carbon-based particle 60, an inner surface 67 of the pores 65, or the outer surface 62 of carbon-based particle 60 and the inner surface 67 of the pores 65.

For example, the silicon-containing coating 70 may be formed on at least a portion of the outer surface 62 of the carbon-based particle 60.

For example, the silicon-containing coating 70 may be formed on at least a portion of the inner surface 67 of the pores 65 of the carbon-based particle 60.

For example, the silicon-containing coating 70 may be formed on at least a portion of the outer surface 62 of the carbon-based particle 60 and at least a portion of the inner surface 67 of the pores 65.

Closed pores 65a may be formed inside the carbon-based particle 60. For example, the closed pores 65a may exist inside the carbon-based particle 60 with being blocked from an outside.

For example, the pore 65 may include the closed pores 65a which are blocked from an outside of the carbon-based particle 60 by the silicon-containing coating 70. For example, the closed pore 65a may represent a void space inside the carbon-based particle 60 formed by closing a pore which is open to the outside by the silicon-containing coating 70.

In some embodiments, the pores 65 may have a size of 0.1 to 10 nm, 0.5 to 8 nm, or 1 to 5 nm. Within the above range, excessive deposition of silicon may be prevented, such that an occurrence of cracks in the anode active material during charging and discharging of the secondary battery may be further suppressed.

The size of pore 65 may refer to a diameter of an entrance of the pore 65 formed in the surface of carbon-based particle 60.

According to exemplary embodiments of the present disclosure, the composite particles 50 may have an equivalent porosity of 5 to 25.1%, and in some embodiments, 8.5 to 22.6%, which is defined by Equation 1 below.

[Equation 1]

$$Equivalent\ porosity\ (\%) = \left( 1 - \frac{\frac{W_{carbon}}{D_{carbon}} + \frac{W_{Si}}{D_{Si}}}{\frac{W_{carbon} + W_{Si}}{D_P}} \right) * 100$$

In Equation 1, $D_{carbon}$ is a density (g/cm$^3$) of carbon, $D_{Si}$ is a density (g/cm$^3$) of silicon, $D_P$ is a density (g/cm$^3$) of the composite particles 50 measured by a helium (He) pycnometer, $W_{Si}$ is a weight (g) of silicon included in the composite particles 50, and $W_{carbon}$ is a weight (g) of carbon included in the composite particles 50.

The equivalent porosity may be calculated through the difference between the volume of the composite particles converted from the density measured by the helium pycnometer and the actual volume of the composite particles. Accordingly, the volume of the pores including the closed pores 65a inside the composite particles 50 may be reflected in the equivalent porosity. Therefore, the porosity (e.g., the equivalent porosity) of the composite particles 50 may be precisely measured.

Within the above equivalent porosity range, the energy density, output characteristics, and life-span characteristics of the anode active material may be improved while the volume expansion of silicon included in the silicon-containing coating 70 is sufficiently suppressed.

If the equivalent porosity is less than 5%, the volume expansion of the silicon may not be sufficiently alleviated, thereby resulting in a reduction in the life-span characteristics.

When the equivalent porosity exceeds 25.1%, the density of the anode active material may be decreased and the resistance may be increased, thereby resulting in a reduction in the energy density and/or life-span characteristics.

According to an embodiment, $D_{carbon}$ in Equation 1 may be 2.1 g/cm$^3$, and $D_{Si}$ may be 2.33 g/cm$^3$. In some embodiments, $W_{Si}$ in Equation 1 may be calculated by Equation 2 below.

[Equation 2]

$$W_{Si}(g) = \left( \frac{W_{carbon}}{1 - R_{Si}} \right) - 1$$

In Equation 2, $R_{Si}$ is a ratio of a weight of silicon included in the silicon-containing coating 70 to a total weight of the composite particles 50 measured through inductively coupled plasma (ICP) analysis, and $W_{carbon}$ is a weight (g) of carbon included in the composite particles 50. $R_{Si}$ is a dimensionless number.

As $W_{Si}$ is measured through ICP analysis, the volume of silicon within the composite particles 50 may be precisely converted. Accordingly, the measurement accuracy and reliability of the equivalent porosity and an internal deposition index in Equation 3 may be improved.

In some embodiments, the composite particles 50 may have an internal deposition index of 1.0 to 2.0, and in one embodiment, 1.01 to 1.55, which is represented by Equation 3 below.

[Equation 3]

$$Internal\ deposition\ index = \frac{(V_t \times W_{Carbon}) - \left( \frac{W_{Carbon} + W_{Si}}{D_P} - \frac{W_{Carbon}}{D_{carbon}} - \frac{W_{Si}}{D_{Si}} \right)}{\frac{W_{Si}}{D_{Si}}}$$

In Equation 3, Vt is a specific volume (cm$^3$/g) of the pores 65 of the carbon-based particles 60, $D_{carbon}$ is a density (g/cm$^3$) of carbon, $D_{Si}$ is a density (g/cm$^3$) of silicon, $D_P$ is a density (g/cm$^3$) of the composite particles 50 (g/cm$^3$) measured by a helium pycnometer, $W_{Si}$ is a weight (g) of silicon included in the composite particles 50, and $W_{carbon}$ is a weight (g) of carbon included in the composite particles 50. The internal deposition index is a dimensionless number.

$D_{carbon}$, $D_{Si}$, $D_P$ and $W_{Si}$ in Equation 3 may be interpreted as having the same meaning as $D_{carbon}$, $D_{Si}$, $D_P$ and $W_{Si}$ in Equation 1. For example, $W_{Si}$ in Equation 3 may be calculated through Equation 2 above. According to an embodiment, in Equation 3, $D_{carbon}$ may be 2.1 g/cm$^3$ and $D_{Si}$ may be 2.33 g/cm$^3$.

The internal deposition index may represent a ratio of a total volume of pores in which silicon can be deposited to an actual volume of silicon. The total volume of pores in which silicon can be deposited may represent a difference between a total pore volume ($V_t*W_{carbon}$) of the carbon-based particles 60 and a volume of the closed pores 65a. The volume of the closed pores 65a may be calculated through the difference between the volume of the composite particles converted from the density measured by the helium pycnometer and the actual volume of the composite particles. Accordingly, it may be quantified whether a region of the composite particles 50, in which silicon can be deposited, is sufficient compared to the volume of silicon included in the composite particles 50.

Within the above internal deposition index range, the content of silicon formed on the inner surface 67 of the pores 65 may be increased and the content of silicon deposited outside the carbon-based particles 60 may be decreased. Accordingly, the life-span characteristics thereof may be improved.

Within the above internal deposition index range, the specific surface area of the composite particles 50 may be maintained within an appropriate range, thereby improving the efficiency of the binder included in the anode. Accordingly, the life-span characteristics thereof may be improved.

In some embodiments, Vt in Equation 3 may be measured by performing a nitrogen ($N_2$) adsorption/desorption method on the carbon-based particles. Accordingly, reliability and accuracy of the total pore volume measurement of the carbon-based particles may be improved.

For example, the nitrogen adsorption/desorption method may be performed by adsorbing and desorbing nitrogen gas to the carbon-based particles 60 according to ISO 15901-2 and ISO 15901-3 of the International Organization for Standardization (ISO). For example, the nitrogen adsorption/desorption method may be performed using ASAP™ 2420 equipment manufactured by Micromeritics.

For the convenience of calculation, $W_{carbon}$ may be assumed to be 1 g in Equations 1 to 3.

In some embodiments, the equivalent porosity may be 8.5 to 22.6%, and the internal deposition index may be 1.01 to 1.55. Within the above ranges, the equivalent porosity and the internal deposition index may be controlled together so that an appropriate amount of silicon is formed on the inner surface of the pores, thereby further improving the capacity retention rate.

The equivalent porosity and the internal deposition index may be adjusted by comprehensively controlling factors including the specific volume (Vt) of the pores of the carbon-based particles 60, the concentration of silane gas among sources of the silicon-containing coating, and the pressure during silicon deposition, etc. For example, the equivalent porosity range and the internal deposition index range according to embodiments of the present disclosure may be satisfied by comprehensively controlling all of the factors without relying on any one of the factors.

In some embodiments, the composite particles 50 may further include a carbon coating (not shown) formed on the silicon-containing coating 70. Accordingly, the surface of the composite particles 50 may be protected and the electrical conductivity may be increased, thereby improving the life-span characteristics and output characteristics.

In some embodiments, the carbon coating may be formed even on a portion of the surface of the carbon-based particle 60 where the silicon-containing coating 70 is not formed. For example, the carbon coating may entirely cover the carbon-based particles 60 and the silicon-containing coating 70. Accordingly, mechanical stability and chemical stability of the anode active material may be improved.

In one embodiment, the carbon coating may include at least one of carbon and a conductive polymer. For example, the conductive polymer may include polyacetylene, polyaniline, polypyrrole, polythiophene and the like.

Hereinafter, a manufacturing method according to exemplary embodiments of the above-described anode active material for a lithium secondary battery will be provided.

In exemplary embodiments, carbon-based particles 60 including pores 65 may be prepared.

In some embodiments, preliminary carbon-based particles may be activated by first calcining them while injecting an inert gas, and second calcining them while injecting water vapor.

For example, the preliminary carbon-based particles may include at least one selected from the group consisting of glucose, sucrose, cellulose, petroleum pitch, coal pitch, biomass (coconut shell, wood, etc.), and resol oligomer.

For example, the first calcining may be performed at about 600 °C to 900 °C for 1 to 6 hours. Accordingly, the size and/or volume of the pores 65 may be appropriately controlled. For example, the inert gas may be nitrogen gas, and the first calcining may be performed under a nitrogen atmosphere.

For example, the second calcining may be performed at about 800 °C to 1000 °C for 1 to 6 hours. Accordingly, the size and/or volume of the pores 65 may be appropriately controlled. The specific volume (Vt) of the pores 65 of the carbon-based particle 60 may be adjusted by changing the temperature and time in the second calcining.

In some embodiments, the activated preliminary carbon-based particles may be cooled, pulverized and classified to prepare the carbon-based particle 60 including the pores 65.

In exemplary embodiments, the composite particles 50 including the silicon-containing coating 70 formed on the surface of the carbon-based particles 60 may be formed by calcining (e.g., a third calcining) the carbon-based particles 60 together with the injected silicon-containing gas (silicon source). For example, the silicon-containing gas may include

silane (SiH$_4$) gas and an inert gas. For example, the inert gas may include nitrogen gas or argon (Ar) gas.

For example, a volume of the silane gas to the total volume of the silicon-containing gas may be 10 vol % to 70 vol %, or 30 vol % to 50 vol %. Accordingly, silicon may be further deposited on the inner surface 67 of the pores 65.

For example, the third calcining may be performed at 400 °C to 600 °C for 1 hour to 6 hours. Accordingly, silicon may be further deposited on the inner surface 67 of the pores 65.

For example, the third calcining may be performed in a low-pressure environment. For example, the third calcining may be performed under a pressure of 50 Torr to 500 Torr.

The composite particles 50 formed by the above-described method may have an equivalent porosity of 5% to 25.1%.

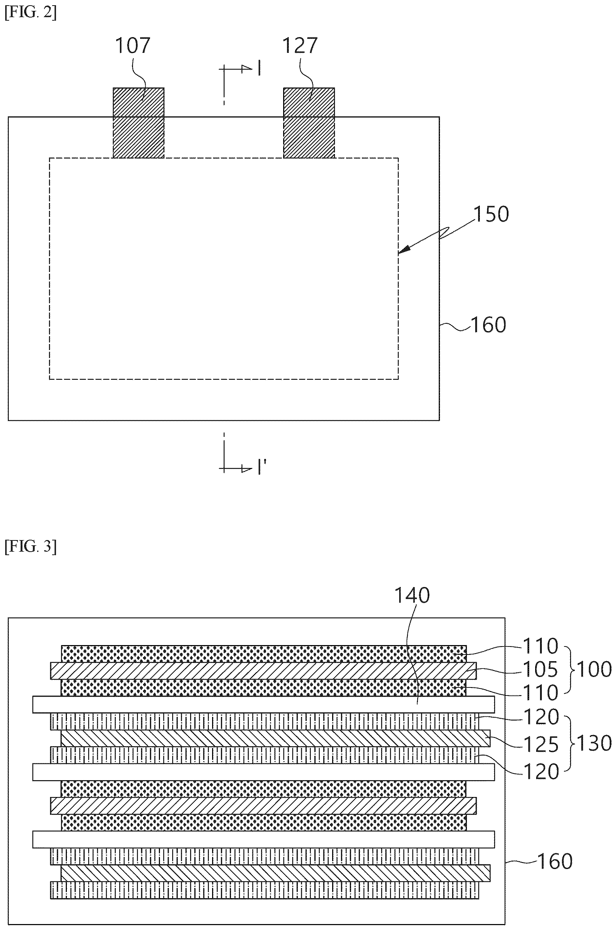

FIGS. 2 and 3 are a schematic plan view and a cross-sectional view illustrating a lithium secondary battery according to exemplary embodiments, respectively. For example, FIG. 3 is a cross-sectional view taken on line I-I' in FIG. 2 in a thickness direction of the battery.

The structures illustrated in FIGS. 2 and 3 are an example for the convenience of description, and the structure of the lithium secondary battery according to the embodiments of the present disclosure is not limited thereto.

The lithium secondary battery may include an anode 130 including the above-described anode active material and a cathode 100 disposed to face the anode 130.

The cathode 100 may include a cathode current collector 105, and a cathode active material layer 110 formed on at least one surface of the cathode current collector 105.

The cathode current collector 105 may include stainless steel, nickel, aluminum, titanium or an alloy thereof. The cathode current collector 105 may also include aluminum or stainless steel subjected to surface treatment with carbon, nickel, titanium or silver. For example, the cathode current collector 105 may have a thickness of 10 μm to 50 μm.

The cathode active material layer 110 may include a cathode active material. The cathode active material may include a compound capable of reversibly intercalating and deintercalating lithium ions.

According to exemplary embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or crystal structure represented by Formula 1 below.

[Formula 1]     $Li_xNi_aM_bO_{2+z}$

In Formula 1, x, a, b and z may be in a range of $0.9 \leq x \leq 1.2$, $0.5 \leq a \leq 0.99$, $0.01 \leq b \leq 0.5$, $-0.5 \leq z \leq 0.1$, respectively. As described above, M may include Co, Mn and/or Al.

The chemical structure represented by Formula 1 indicates a bonding relationship between elements included in the layered structure or crystal structure of the cathode active material, and does not exclude other additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing introduction and substitution of the additional elements.

In one embodiment, the inventive material may further include auxiliary elements which are added to the main active elements, thus to enhance chemical stability of the cathode active material or the layered structure/crystal structure. The auxiliary element may be incorporated into the layered structure/crystal structure together to form a bond, and it should be understood that this case is also included within the chemical structure range represented by Formula 1.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P or Zr. The auxiliary element may act as an auxiliary active element which contributes to the capacity/output activity of the cathode active material together with Co or Mn like Al.

For example, the cathode active material or the lithium-nickel metal oxide may include a layered structure or crystal structure represented by Formula 1-1 below.

[Formula 1-1]     $Li_xNi_aM1_{b1}M2_{b2}O_{2+z}$

In Formula 1-1, M1 may include Co, Mn and/or Al. M2 may include the above-described auxiliary elements. In Formula 1-1, x, a, b1, b2 and z may be in a range of $0.9 \leq x \leq 1.2$, $0.5 \leq a \leq 0.99$, $0.01 \leq b1+b2 \leq 0.5$, $-0.5 \leq z \leq 0.1$, respectively.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may exist on the surface of the lithium-nickel metal oxide particles, or may penetrate through the surface of the lithium-nickel metal oxide particles to be included in the bonding structure represented by the Formula 1 or Formula 1-1 above.

The cathode active material may include a nickel-cobalt-manganese (NCM)-based lithium oxide. In this case, an NCM-based lithium oxide with an increased content of nickel may be used.

Ni may be provided as a transition metal related to the output and capacity of the lithium secondary battery. Therefore, as described above, by employing a high-content (High-Ni) composition in the cathode active material, a high-capacity cathode and a high-capacity lithium secondary battery may be provided.

However, as the content of Ni is increased, long-term storage stability and life-span stability of the cathode or the secondary battery may be relatively decreased, and a side reaction with the electrolyte may also be increased. However, according to exemplary embodiments, the life-span stability and capacity retention characteristics may be improved through Mn while maintaining electrical conductivity by including Co.

The content of Ni (e.g., a mole fraction of nickel based on the total moles of nickel, cobalt and manganese) in the NCM-based lithium oxide may be 0.5 or more, 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., $LiFePO_4$).

In some embodiments, the cathode active material may include, for example, a Li-rich layered oxide (LLO)/over-lithiated oxide (OLO)-based active material, an Mn-rich active material, a Co-less active material, and the like, which have a chemical structure or crystal structure represented by Formula 2 below. These may be used alone or in combination of two or more thereof.

$$[\text{Formula 2}] \qquad p[Li_2MnO_3]\cdot(1-p)[Li_qJO_2]$$

In Formula 2, p and q may be in a range of $0<p<1$, $0.9\leq q\leq 1.2$, respectively, and J may include at least one element among Mn, Ni, Co, Fe, Cr, V, Cu, Zn, Ti, Al, Mg and B.

The cathode active material may be mixed in a solvent to prepare a cathode slurry. The cathode slurry may be applied to at least one surface of a cathode current collector 105, followed by drying and pressing the same to prepare the cathode active material layer 110. The coating may include a method such as gravure coating, slot die coating, simultaneous multilayer die coating, imprinting, doctor blade coating, dip coating, bar coating or casting. The cathode active material layer 110 may further include a binder, and optionally further include a conductive material, a thickener or the like.

As the solvent, N-methyl-2-pyrrolidone (NMP), dimethylformamide, dimethylacetamide, N,N-dimethylaminopropylamine, ethylene oxide, tetrahydrofuran, and the like may be used.

The binder may include polyvinylidene fluoride (PVDF), poly(vinylidene fluoride-co-hexafluoropropylene), polyacrylonitrile, polymethylmethacrylate, acrylonitrile butadiene rubber (NBR), polybutadiene rubber (BR), styrene-butadiene rubber (SBR) and the like. These may be used alone or in combination of two or more thereof.

In one embodiment, a PVDF-based binder may be used as the cathode binder. In this case, the amount of binder for forming the cathode active material layer 110 may be decreased and the amount of the cathode active material may be relatively increased. Accordingly, the output characteristics and capacity characteristics of the secondary battery may be improved.

The conductive material may be added to the cathode active material layer 110 in order to enhance the conductivity thereof and/or the mobility of lithium ions or electrons. For example, the conductive material may include a carbon-based conductive material such as graphite, carbon black, acetylene black, Ketjen black, graphene, carbon nanotubes (CNTs), vapor-grown carbon fibers (VGCFs), carbon fibers, and/or a metal-based conductive material including tin, tin oxide, titanium oxide, or a perovskite material such as $LaSrCoO_3$, and $LaSrMnO_3$. These may be used alone or in combination of two or more thereof.

The cathode slurry may further include a thickener and/or dispersant. In one embodiment, the cathode slurry may include a thickener such as carboxymethyl cellulose (CMC).

The anode 130 may include an anode current collector 125 and an anode active material layer 120 formed on at least one surface of the anode current collector 125.

For example, the anode current collector 125 may include a copper foil, a nickel foil, a stainless steel foil, a titanium foil, a nickel foam, a copper foam, a polymer substrate coated with conductive metal and the like. These may be used alone or in combination of two or more thereof. For example, the anode current collector 125 may have a thickness of 10 $\mu$m to 50 $\mu$m.

The anode active material layer 120 may include an anode active material including the above-described composite particles 50. For example, the anode active material may include a plurality of composite particles 50.

In some embodiments, the anode active material may include the composite particles 50 and a graphite-based active material. For example, the graphite-based active material may include artificial graphite and/or natural graphite.

A content of the composite particles 50 may be 3% by weight ('wt %') or more, 5 wt % or more, 10 wt % or more, 15 wt % or more, 20 wt % or more, 25 wt % or more, 30 wt % or more, 35 wt % or more, 40 wt % or more, or 45 wt % or more based on a total weight of the anode active material (e.g., a total weight of the plurality of composite particles 50 and the graphite-based active material).

The content of the composite particles may be 90 wt % or less, 85 wt % or less, 80 wt % or less, 75 wt % or less, 70 wt % or less, 65 wt % or less, 60 wt % or less, 55 wt % or less, or 50 wt % or less based on the total weight of the anode active material.

In one embodiment, the anode active material may be substantially composed of the composite particles 50 and the graphite-based active material.

The anode active material may be mixed in a solvent to prepare an anode slurry. The anode slurry may be applied/deposited to an anode current collector 125, followed by drying and pressing the same to prepare an anode active material layer 120. The coating may include a method such as gravure coating, slot die coating, simultaneous multilayer die coating, imprinting, doctor blade coating, dip coating, bar coating or casting. The anode active material layer 120 may further include a binder, and optionally further include a conductive material, a thickener or the like.

The solvent included in the anode slurry may include water, pure water, deionized water, distilled water, ethanol, isopropanol, methanol, acetone, n-propanol, t-butanol and the like. These may be used alone or in combination of two or more thereof.

The above-described materials that can be used when manufacturing the cathode 100 as the binder, conductive material and thickener may be used.

In some embodiments, a styrene-butadiene rubber (SBR)-based binder, carboxymethyl cellulose (CMC), polyacrylic acid-based binder, poly(3,4-ethylenedioxythiophene, PEDOT)-based binder, and the like may be used as an anode binder. These may be used alone or in combination of two or more thereof.

In exemplary embodiments, a separation membrane 140 may be interposed between the cathode 100 and the anode 130. The separation membrane 140 may be configured to prevent an electrical short between the cathode 100 and the anode 130, and to allow a flow of ions to occur. For example, the separation membrane may have a thickness of 10 $\mu$m to 20 $\mu$m.

For example, the separation membrane 140 may include a porous polymer film or a porous nonwoven fabric.

The porous polymer film may include a polyolefin polymer such as an ethylene polymer, a propylene polymer, an ethylene/butene copolymer, an ethylene/hexene copolymer, and an ethylene/methacrylate copolymer, etc. These may be used alone or in combination of two or more thereof.

The porous nonwoven fabric may include glass fibers having a high melting point, polyethylene terephthalate fibers and the like.

The separation membrane 140 may also include a ceramic-based material. For example, inorganic particles may be applied to the polymer film or dispersed within the polymer film to improve heat resistance.

The separation membrane 140 may have a single-layer or multi-layer structure including the above-described polymer film and/or non-woven fabric.

According to exemplary embodiments, an electrode cell is defined by the cathode 100, the anode 130, and the separation membrane 140, and a plurality of electrode cells are laminated to form, for example, a jelly roll type electrode assembly 150. For example, the electrode assembly 150 may be formed by winding, laminating, z-folding, stack-folding, and the like of the separation membrane 140.

The electrode assembly 150 may be housed in a case 160 together with an electrolyte to define a lithium secondary battery. According to exemplary embodiments, a non-aqueous electrolyte may be used as the electrolyte.

The non-aqueous electrolyte includes a lithium salt of an electrolyte and an organic solvent, the lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2$; $SCN^-$ and $(CF_3CF_2SO_2)_2N^-$, etc. may be exemplified.

As the organic solvent, for example, propylene carbonate (PC), ethylene carbonate (EC), butylene carbonate, diethyl carbonate (DEC), dimethyl carbonate (DMC), ethyl methyl carbonate (EMC), methylpropyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfur oxide, acetonitrile, diethoxyethane, sulfolane, gamma-butyrolactone, and propylene sulfite, and the like may be used. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like. These may be used alone or in combination of two or more thereof.

The cyclic carbonate compound may include vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis-oxalato phosphate, lithium difluoro phosphate, etc.

The borate compound may include lithium bis(oxalate) borate, etc.

In some embodiments, a solid electrolyte may be used instead of the above-described non-aqueous electrolyte. In this case, the lithium secondary battery may be manufactured in the form of an all-solid-state battery. In addition, a solid electrolyte layer may be disposed between the cathode 100 and the anode 130 instead of the above-described separation membrane 140.

The solid electrolyte may include a sulfide-based electrolyte. As a non-limiting example, the sulfide-based electrolyte may include $Li_2S-P_2S_5$, $Li_2S-P_2S_5-LiCl$, $Li_2S-P_2S_5-LiBr$, $Li_2S-P_2S_5-LiCl-LiBr$, $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (m and n are positive numbers, Z is Ge, Zn or Ga), $Li_2S-GeS_2$, $Li_2S-SiS_2-Li_3PO_4$, $Li_2S-SiS_2-Li_pMO_q$ (p and q are positive numbers, M is P, Si, Ge, B, Al, Ga or In), $Li_y-xPS_6-xCl_x$ ($0 \leq x \leq 2$), $Li_7-xPS_6-xBr_x$ ($0 \leq x \leq 2$), $Li_7-xPS_6-xI_x$ ($0 \leq x \leq 2$), etc. These may be used alone or in combination of two or more thereof.

In one embodiment, the solid electrolyte may include an oxide-based amorphous solid electrolyte, such as, for example, $Li_2O-B_2O_3-P_2O_5$, $Li_2O-SiO_2$, $Li_2O-B_2O_3$, $Li_2O-B_2O_3-ZnO$, etc.

As shown in FIG. 3, electrode tabs (a cathode tab and an anode tab) may protrude from the cathode current collector 105 and the anode current collector 125, respectively, which belong to each electrode cell, and may extend to one side of the case 160. The electrode tabs may be fused together with the one side of the case 160 to form electrode leads (a cathode lead 107 and an anode lead 127) extending or exposed to an outside of the case 160.

The lithium secondary battery may be manufactured, for example, in a cylindrical shape using a can, a square shape, a pouch type or a coin shape.

Hereinafter, experimental examples including specific examples and comparative examples are proposed to facilitate understanding of the present invention. However, the following examples are only given for illustrating the present invention and those skilled in the art will obviously understand that various alterations and modifications are possible within the scope and spirit of the present invention. Such alterations and modifications are duly included in the appended claims.

### Example 1

Preparation of carbon-based particles

Coconut charcoal was input into a thermal chamber, nitrogen gas was injected, and a first calcining was performed at 800 °C for 2 hours. Then, steam was injected into the thermal chamber and a second calcining was performed at 900 °C for 2 hours to activate the same.

After activation, the coconut charcoal was cooled to room temperature, pulverized and classified to prepare carbon-based particles (D50: 8 μm) including pores.

For the prepared carbon-based particles, the specific volume (Vt) of the pores of the carbon-based particles was measured using the method described in Experimental Example (1)3) below.

Formation of silicon-containing coating

A silicon-containing gas including silane gas and nitrogen gas was injected into a CVD coater at a flow rate of 50 mL/min to 100 mL/min. The content of the silane gas based on the total volume of the silicon-containing gas was 10 vol %. The temperature was increased to 550 °C at a heating rate of 5 °C/min to 20 °C/min and maintained for about 120 minutes to prepare composite particles including the silicon-containing coating. The pressure in the CVD coater was maintained at 100 Torr.

The silicon-containing coating was formed targeting to secure a silicon content of 50 wt % based on the total weight of the composite particles.

Formation of anode

95.5 wt % of an anode active material mixed with 15 wt % of the composite particles and 80.5 wt % of artificial graphite, 1 wt % of carbon nanotubes (CNTs) as a conductive material, 2 wt % of styrene-butadiene rubber (SBR) as a binder, and 1.5 wt % of carboxymethyl cellulose (CMC) as a thickener were mixed to obtain an anode slurry.

The anode slurry was applied to a copper substrate, followed by drying and pressing the same to prepare an anode.

Manufacturing of lithium (Li) half-cell

A lithium half-cell including the prepared anode and using lithium (Li) metal as a counter electrode (cathode) was manufactured.

Specifically, a lithium coin half-cell of CR2016 (diameter 20 mm, thickness 1.6 mm) standard was manufactured by interposing a separation membrane (polyethylene, thickness 20 $\mu$m) between the prepared anode and lithium metal (thickness 1.6 mm).

A combination of lithium metal/separation membrane/anode was put in a coin cell plate, an electrolyte was injected, and then a cap was covered and clamped. The electrolyte used herein was prepared by adding 2.0 vol % of fluoroethylene carbonate (FEC) based on the total volume of the electrolyte to a 1M $LiPF_6$ solution formed using a mixed solvent of EC/EMC (3:7; volume ratio). The manufactured lithium half-cell was impregnated for 3 to 24 hours after clamping, then 3 cycles of charging and discharging at 0.1C were performed thereon (charging condition: CC-CV 0.1C 0.01 V 0.01C CUT-OFF, discharging condition: CC 0.1C 1.5 V CUT-OFF).

**Example 2**

Composite particles, an anode, and a lithium half-cell were manufactured according to the same procedures as described in Example 1, except that the second calcining was performed at 900 °C for 1 hour.

**Example 5**

Composite particles, an anode, and a lithium half-cell were manufactured according to the same procedures as described in Example 1, except that the second calcining was performed at 800 °C for 2 hours.

**Examples 3, 4, 6 to 8, and Comparative Examples 1 to 4**

Composite particles, anodes, and lithium half-cells were manufactured according to the same procedures as described in Example 1, except that the content of silane gas based on the total volume of silicon-containing gas and the pressure of the CVD coater were adjusted as described in Table 1 below.

**Example 9**

Carbon-based particles having a silicon-containing coating formed thereon were input into a thermal CVD chamber, and heat treatment was performed at less than 600 °C while supplying a mixed gas of ethylene gas and argon was to prepare composite particles having a carbon coating formed on the silicon-containing coating.

Composite particles, an anode, and a lithium half-cell were manufactured according to the same procedures as described in Example 1, except for the above contents.

**Comparative Example 5**

Composite particles, an anode, and a lithium half-cell were manufactured according to the same procedures as described in Example 1, except that the second calcining was performed at 1000 °C for 6 hours.

**Experimental Example**

(1) Evaluation of equivalent porosity and internal deposition index

1) Measurement of density ($D_P$) of the composite particles

Samples, of which weights of the above-described composite particles prepared according to examples and comparative examples are known, were dried at 130 °C for 5 hours or more, and 70 vol % of each sample of a 10 cm$^3$ cell was input into the cell.

The density of the sample was measured at room temperature using AccPyc II equipment manufactured by Micromeritic. The number of purging was 10 times, and the measurement was repeated 100 times, then an average value was evaluated as the density ($D_P$) of the composite particles.

2) Measurement of ratio of the weight of silicon to the total weight of the composite particles ($R_{Si}$)

0.05 g of powder of the above-described composite particles prepared in the examples and comparative examples was input into a 50 mL polypropylene tube (PP tube), respectively. Nitric acid was input into the PP tube and left at room temperature for 5 minutes. Hydrofluoric acid was input into the PP tube and the PP tube was sealed with parafilm, then dissolved at room temperature for 1 hour and left in a refrigerated chamber for 12 hours. Thereafter, 45 mL of distilled water was input into the PP tube and cooled in the refrigerated chamber for 30 minutes. Saturated boric acid water was input into the PP tube and stirred at 60 rpm for 60 minutes to neutralize the boric acid. Undissolved components were removed with a 0.45 $\mu$m syringe filter to prepare a sample.

The sample was input into an inductively coupled plasma optical emission spectrometer (ICP-OES Optima 8300DV, Perkin Elmer) and analyzed to measure the ratio of silicon weight to the total weight of the composite particles ($R_{Si}$).

3) Measurement of specific volume (Vt) of the pores of carbon-based particle

For the above-described carbon-based particles prepared in the examples and comparative examples, nitrogen was adsorbed and desorbed according to ISO 15901-2 and ISO 15901-3 of the International Organization for Standardization (ISO), and the specific volume (Vt) was measured.

Specifically, the carbon-based particles were pretreated at 180 °C for 8 hours, and then input into the ASAP™ 2420 equipment manufactured by Micromeritics. Isothermal adsorption and desorption curves according to nitrogen adsorption and desorption at 77 K were measured by means of the equipment, and the specific volume (Vt) of the pores was calculated.

4) Calculation of equivalent porosity and internal deposition index

$W_{carbon}$ was set to 1 g, $D_{carbon}$ to 2.1 g/cm$^3$, and $D_{Si}$ to 2.33 g/cm$^3$, and the $D_P$, $R_{Si}$ and $V_t$ measured for each particle of the examples and comparative examples were substituted into Equations 1 to 3 to calculate the equivalent porosity and internal deposition index.

(2) Evaluation of capacity retention rate

For the lithium half-cells prepared in the examples and comparative examples, charging (CC/CV 0.5C 0.01 V 0.01C CUT-OFF) and discharging (CC 0.1C 3.0 V CUT-OFF) were repeated 50 cycles (times), and the capacity retention rate was evaluated by a percentage of a value obtained by dividing the discharge capacity measured at 50th cycle by the discharge capacity at 1st cycle.

Measurement and evaluation results are shown in Tables 1 and 2 below.

[TABLE 1]

| | Content of the silane gas (vol %) | Pressure in CVD coater (Torr) | $V_t$ (cm$^3$/g) | $R_{Si}$ | $D_P$ (g/cm$^3$) |
|---|---|---|---|---|---|
| Example 1 | 10 | 100 | 0.8 | 0.510 | 1.73 |
| Example 2 | 10 | 100 | 0.5 | 0.490 | 2.02 |
| Example 3 | 50 | 100 | 0.8 | 0.500 | 1.88 |
| Example 4 | 10 | 300 | 0.8 | 0.500 | 1.92 |
| Example 5 | 10 | 100 | 0.3 | 0.500 | 1.90 |
| Example 6 | 70 | 400 | 0.8 | 0.530 | 1.66 |
| Example 7 | 80 | 350 | 0.8 | 0.540 | 1.67 |
| Example 8 | 10 | 40 | 0.8 | 0.465 | 2.08 |
| Example 9 | 10 | 100 | 0.8 | 0.500 | 1.71 |
| Comparative Example 1 | 10 | 720 | 0.8 | 0.510 | 1.64 |
| Comparative Example 2 | 10 | 20 | 0.8 | 0.500 | 2.11 |
| Comparative Example 3 | 2 | 720 | 0.8 | 0.460 | 2.13 |

(continued)

| | Content of the silane gas (vol %) | Pressure in CVD coater (Torr) | $V_t$ (cm³/g) | $R_{Si}$ | $D_P$ (g/cm³) |
|---|---|---|---|---|---|
| Comparative Example 4 | 80 | 100 | 0.8 | 0.500 | 2.16 |
| Comparative Example 5 | 10 | 100 | 1.5 | 0.520 | 1.60 |

[TABLE 2]

| | Equivalent porosity (%) | Internal deposition index | Capacity retention rate (%, 50 cycles) |
|---|---|---|---|
| Example 1 | 21.8 | 1.22 | 94 |
| Example 2 | 8.5 | 1.01 | 97 |
| Example 3 | 14.9 | 1.49 | 95 |
| Example 4 | 13.1 | 1.55 | 94 |
| Example 5 | 14.0 | 0.36 | 87 |
| Example 6 | 25.1 | 0.99 | 89 |
| Example 7 | 24.7 | 0.95 | 87 |
| Example 8 | 5.5 | 2.01 | 86 |
| Example 9 | 22.6 | 1.25 | 96 |
| Comparative Example 1 | 25.8 | 1.07 | 71 |
| Comparative Example 2 | 4.5 | 1.76 | 79 |
| Comparative Example 3 | 3.2 | 2.11 | 80 |
| Comparative Example 4 | 2.2 | 1.82 | 59 |
| Comparative Example 5 | 27.7 | 2.45 | 80 |

Referring to Tables 1 and 2, in the examples, where the equivalent porosity is 5 to 25.1%, the capacity retention rate was improved compared to the comparative examples.

In Examples 1 to 4 and Example 9, where the equivalent porosity was 8.5 to 22.6% and the internal deposition index was 1.01 to 1.55, the capacity retention rate was relatively further improved.

In Examples 5 to 8, where the internal deposition index deviates from 1.0 to 2.0, the capacity retention rate was relatively reduced.

In Example 9 including carbon coating, the capacity retention rate was relatively improved.

**Claims**

1.  An anode active material for a lithium secondary battery comprising:

    carbon-based particles including pores; and
    composite particles including a silicon-containing coating formed on a surface of the carbon-based particles,
    wherein the composite particles have an equivalent porosity of 5 to 25.1%, which is defined by Equation 1 below:

    [Equation 1]

    $$Equivalent\ porosity\ (\%) = \left( 1 - \frac{\frac{W_{carbon}+W_{Si}}{D_{carbon}\ \ \ D_{Si}}}{\frac{W_{carbon}+W_{Si}}{D_P}} \right) * 100$$

    (In Equation 1, $D_{carbon}$ is a density (g/cm³) of carbon, $D_{Si}$ is a density (g/cm³) of silicon, $D_P$ is a density (g/cm³) of the composite particles measured by a helium (He) pycnometer, $W_{Si}$ is a weight (g) of silicon included in the composite particles, and $W_{carbon}$ is a weight (g) of carbon included in the composite particles).

2. The anode active material for a lithium secondary battery according to claim 1, wherein $W_{Si}$ in Equation 1 is calculated through Equation 2 below:

[Equation 2]

$$W_{Si}(g) = \left(\frac{W_{carbon}}{1-R_{Si}}\right) - 1$$

(In Equation 2, $R_{Si}$ is a ratio of a weight of silicon included in the silicon-containing coating to a total weight of the composite particles measured through inductively coupled plasma (ICP) analysis, and $W_{carbon}$ is a weight (g) of carbon included in the composite particles).

3. The anode active material for a lithium secondary battery according to claims 1 or 2, wherein $D_{carbon}$ is 2.1 g/cm$^3$, and $D_{Si}$ is 2.33 g/cm$^3$.

4. The anode active material for a lithium secondary battery according to one of claims 1 to 3, wherein the carbon-based particles include an amorphous structure.

5. The anode active material for a lithium secondary battery according to one of claims 1 to 4, wherein silicon included in the silicon-containing coating includes an amorphous structure.

6. The anode active material for a lithium secondary battery according to one of claims 1 to 5, wherein the composite particles have an internal deposition index of 1.0 to 2.0, which is represented by Equation 3 below:

[Equation 3]

$$Internal\ deposition\ index = \frac{(V_t \times W_{Carbon}) - \left(\frac{W_{Carbon}+W_{Si}}{D_P} - \frac{W_{Carbon}}{D_{carbon}} - \frac{W_{Si}}{D_{Si}}\right)}{\frac{W_{Si}}{D_{Si}}}$$

(In Equation 3, Vt is a specific volume (cm$^3$/g) of the pores of the carbon-based particles, $D_{carbon}$ is a density (g/cm$^3$) of carbon, $D_{Si}$ is a density (g/cm$^3$) of silicon, $D_P$ is a density (g/cm$^3$) of the composite particles (g/cm$^3$) measured by a helium pycnometer, $W_{Si}$ is a weight (g) of silicon included in the composite particles, and $W_{carbon}$ is a weight (g) of carbon included in the composite particles).

7. The anode active material for a lithium secondary battery according to claim 6, wherein $W_{Si}$ in Equation 3 is calculated through Equation 2 below:

[Equation 2]

$$W_{Si}(g) = \left(\frac{W_{carbon}}{1-R_{Si}}\right) - 1$$

(In Equation 2, $R_{Si}$ is a ratio of a weight of silicon included in the silicon-containing coating to a total weight of the composite particles measured through inductively coupled plasma (ICP) analysis, and $W_{carbon}$ is a weight (g) of carbon included in the composite particles).

8. The anode active material for a lithium secondary battery according to claim 6, wherein $D_{carbon}$ is 2.1 g/cm$^3$, and $D_{Si}$ is 2.33 g/cm$^3$.

9. The anode active material for a lithium secondary battery according to claim 6, wherein Vt is measured by a nitrogen adsorption/desorption method.

10. The anode active material for a lithium secondary battery according to one of claims 1 to 9, wherein the composite particles further comprise a carbon coating formed on the silicon-containing coating.

11. The anode active material for a lithium secondary battery according to one of claims 1 to 10, wherein the pores include a shape recessed from the outermost portion of the carbon-based particles into an inside of the carbon-based particles.

12. The anode active material for a lithium secondary battery according to one of claims 1 to 11, wherein the pores include closed pores which are blocked from an outside of the carbon-based particles by the silicon-containing coating.

13. A lithium secondary battery comprising:

an anode which comprises the anode active material for a lithium secondary battery according to one of claims 1 to 12; and
a cathode disposed to face the anode.

[FIG. 1]

[FIG. 2]

[FIG. 3]

Europäisches
Patentamt

European
Patent Office

Office européen
des brevets

# EUROPEAN SEARCH REPORT

Application Number

EP 24 21 1282

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 314 651 A (SICHUAN WUKEJINGUI NEW MATERIAL TECH CO LTD) 23 June 2023 (2023-06-23) * paragraph [0056] - paragraph [0063] * ----- | 1-13 | INV. H01M4/133 ADD. H01M4/62 H01M4/02 |
| X | CN 115 332 483 A (NINGDE AMPEREX TECHNOLOGY LTD) 11 November 2022 (2022-11-11) * paragraph [0060] - paragraph [0061] * ----- | 1-9, 11-13 | |

TECHNICAL FIELDS SEARCHED (IPC)

H01M

The present search report has been drawn up for all claims

| Place of search | Date of completion of the search | Examiner |
|---|---|---|
| Munich | 5 March 2025 | Radeck, Stephanie |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 24 21 1282

This annex lists the patent family members relating to the patent documents cited in  the above-mentioned European search report.
The members are as contained in the European Patent Office EDP file on
The European Patent Office is in no way liable for these particulars which are merely given for the purpose of information.

05-03-2025

| Patent document cited in search report | | Publication date | Patent family member(s) | Publication date |
|---|---|---|---|---|
| CN 116314651 | A | 23-06-2023 | NONE | |
| CN 115332483 | A | 11-11-2022 | NONE | |

EPO FORM P0459

For more details about this annex : see Official Journal of the European Patent Office, No. 12/82